# EUROPÄISCHE PATENTANMELDUNG

(11) **EP 4 309 873 A2**
(43) Veröffentlichungstag der Anmeldung: **24.01.2024**
(21) Anmeldenummer: 23165070.6
(22) Anmeldetag: 29.03.2023
(51) Int. Cl.: B29C 49/12, B29C 49/46, B29C 49/42

(54) **VORRICHTUNG UND VERFAHREN ZUM UMFORMEN VON KUNSTSTOFFVORFORMLINGEN ZU KUNSTSTOFFBEHÄLTNISSEN MIT FORMTRÄGERHALTER MIT TRAGENDER FUNKTION**

(30) Priorität: 15.07.2022 DE 102022117729
(71) Anmelder: Krones AG, 93073 Neutraubling (DE)
(72) Erfinder: Theen, Daniel, 93073 Neutraubling (DE); Geltinger, Florian, 93073 Neutraubling (DE); Gerngross, Florian, 93073 Neutraubling (DE); Suppes, Waldemar, 93073 Neutraubling (DE); Soellner, Jürgen, 93073 Neutraubling (DE); Wittmann, Christian, 93073 Neutraubling (DE)
(74) Vertreter: Hannke Bittner & Partner mbB Regensburg

(57) **Zusammenfassung**

Vorrichtung zum Umformen von Kunststoffvorformlingen zu Kunststoffbehältnissen mit einer Transporteinrichtung, wobei die Transporteinrichtung einen drehbaren Transportträger aufweist, an dem eine Vielzahl von Umformungsstationen angeordnet ist, wobei diese Umformungsstationen jeweils Blasformeinrichtungen aufweisen, innerhalb derer die Kunststoffvorformlinge durch Beaufschlagung mit einem fließfähigen Medium zu den Kunststoffbehältnissen umformbar sind und die Umformungsstationen jeweils Reckeinrichtungen zum Dehnen der Kunststoffvorformlinge in deren Längsrichtung aufweisen und diese Reckeinrichtungen jeweils wenigstens eine in der Längsrichtung der Kunststoffvorformlinge bewegliche Reckstange aufweisen, welche in die Kunststoffvorformlinge einführbar ist und wobei die Vorrichtung einen Reinraum aufweist, welcher von mehreren Wandungen begrenzt wird und innerhalb dessen die Kunststoffvorformlinge zu den Kunststoffbehältnissen expandiert werden. Erfindungsgemäß sind die Reckeinrichtungen und die Umformungsstationen jeweils an einem Formträgerhalter angeordnet und werden von diesem gehalten, so dass der Formträgerhalter als tragende Einrichtung der Vorrichtung ausgeführt ist und die Wandungen des Reinraums nur dazu geeignet und bestimmt sind, die Vorrichtung von einer unsterilen Umgebung abzugrenzen.

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden die Kunststoffvorformlinge üblicherweise innerhalb einer Umformungsstation und genauer innerhalb einer Blasformeinrichtung durch Beaufschlagung mit einem fließfähigen Medium zu den Kunststoffbehältnissen umgeformt. Die Blasformeinrichtungen weisen dabei üblicherweise zwei Blasformseitenteile und ein Bodenteil auf, welche gemeinsam einen Hohlraum ausbilden, welcher einer Negativkontur des fertigen Kunststoffbehältnisses entspricht. Aus dem Stand der Technik sind weiterhin sog. Blasformmaschinen bekannt, welche während des Blasvorgangs die Kunststoffvorformlinge auch in ihrer Längsrichtung dehnen und hierzu eine Reckeinheit mit einer Reckstange aufweist. Hierbei handelt es sich insbesondere um sog. Streckblasmaschinen.

Eine Vielzahl von Umformungsstationen ist dabei an einem bewegbaren und insbesondere drehbaren Transportträger, insbesondere einem Blasrad, angeordnet. Im internen Stand der Technik der Anmelderin ist dieses Blasrad sehr massiv ausgebildet bzw. aufgebaut und trägt sowohl die Umformungsstationen als auch die Reckeinheiten. Gleichzeitig ist das Blasrad der drehende Teil innerhalb des Reinraums, so dass eine sehr große Masse in Rotation versetzt werden muss.

Das aus dem internen Stand der Technik der Anmelderin bekannte Blasrad ist demnach sehr schwer und aufwendig in der Herstellung, wobei darüber hinaus auch die Montage der Umformungsstationen auf dem Blasrad aufwendig ist, da diese von vorne auf das Blasrad gehoben werden müssen.

In jüngerer Zeit sind auch Vorrichtungen und Verfahren bekannt geworden, bei denen die Umformung der Kunststoffvorformlinge zu den Kunststoffbehältnissen innerhalb eines Reinraumes erfolgt. Auf diese Weise ist es beispielsweise möglich, dass bereits der gesamte Umformungsprozess unter sterilen Bedingungen erfolgt und daher anschließend die gefertigten Kunststoffbehältnisse nicht erneut oder nur mit verringertem Aufwand sterilisiert werden müssen.

Bei aus dem Stand der Technik der Anmelderin bekannten Vorrichtungen zum Umformen von Kunststoffvorformlingen zu Kunststoffbehältnissen ist ein großer Teil der Bauteile, die sich bei der Blasstation bewegen, außerhalb des Reinraums angeordnet. Dazu gehören beispielsweise Verriegelungsrollen und die Bodenhubansteuerung oder auch Kupplungen für Schläuche oder Leitungen. Die Mechanik wird dann jeweils durch zwei Faltenbälge vom Reinraum getrennt.

Diese Faltenbälge sind dabei nachteilig, da diese sehr schnell verschleißen und entsprechend oft ausgetauscht werden müssen. Außerdem sind die Montagepositionen der Faltenbälge unter dem Isolator bzw. Reinraum nicht gut zu erreichen.

Der vorliegenden Erfindung liegt daher die Aufgabe zugrunde, eine Vorrichtung und ein Verfahren bereitzustellen, welche die aus dem Stand der Technik genannten Nachteile beseitigen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Vorrichtung zum Umformen von Kunststoffvorformlingen zu Kunststoffbehältnissen gerichtet, mit einer Transporteinrichtung, welche die umzuformenden Kunststoffvorformlinge entlang eines vorgegebenen Transportpfads transportiert, wobei die Transporteinrichtung einen drehbaren Transportträger aufweist, an dem eine Vielzahl von Umformungsstationen angeordnet ist, wobei diese Umformungsstationen jeweils Blasformeinrichtungen aufweisen, innerhalb derer die Kunststoffvorformlinge durch Beaufschlagung mit einem fließfähigen Medium zu den Kunststoffbehältnissen umformbar sind und die Umformungsstationen jeweils Beaufschlagungseinrichtungen aufweisen, um die Kunststoffvorformlinge mit dem fließfähigen Medium zu beaufschlagen, wobei die Umformungsstationen jeweils Reckeinrichtungen zum Dehnen der Kunststoffvorformlinge in deren Längsrichtung aufweisen und diese Reckeinrichtungen jeweils wenigstens eine in der Längsrichtung der Kunststoffvorformlinge bewegliche Reckstange aufweisen, welche in die Kunststoffvorformlinge einführbar ist und wobei die Vorrichtung einen Reinraum aufweist, welcher von mehreren Wandungen begrenzt wird und innerhalb dessen die Kunststoffvorformlinge zu den Kunststoffbehältnissen expandiert werden.

Erfindungsgemäß sind die Reckeinrichtungen und/oder die Umformungsstationen an einem Formträgerhalter angeordnet und werden von diesem gehalten, so dass der Formträgerhalter als tragende Einrichtung der Vorrichtung ausgeführt ist und die Wandungen des Reinraums nur dazu geeignet und bestimmt sind, die Vorrichtung von einer unsterilen Umgebung abzugrenzen.

Es wird demnach erfindungsgemäß vorgeschlagen, dass die Wandungen des Reinraums als nicht tragende Einrichtungen ausgebildet werden und nur noch, bevorzugt ausschließlich, dazu dienen die Vorrichtung von der unsterilen Umgebung abzugrenzen und die Umformungsstation und die Reckeinheit an einem Formträger anzuordnen, welcher als tragende Einrichtung ausgebildet ist. Die Wandungen des Reinraums haben demnach bevorzugt (nur bzw. ausschließlich) eine abgrenzende Funktion.

Unter einer Ausführung als nicht tragende Einrichtung wird insbesondere verstanden, dass die Wandungen des Reinraums weder dazu geeignet noch dazu bestimmt ist, Bestandteile der Vorrichtung, wie etwa Antriebe, Umformungsstationen und dergleichen zu tragen.

So können die Wandungen des Reinraums beispielsweise in einer Materialstärke und/oder einem Material gefertigt sein, welches keine tragende und/oder stützende Funktion ermöglicht.

In der Vorrichtung wird dabei bevorzugt ein einfacher Transportträger bzw. einfaches Blasrad verwendet, auf welchen bevorzugt ein unterer Teil des Reinraums bzw. Isolators mit Dichtungseinrichtung, beispielsweise Wasserschloss, aufgesetzt wird. Dieser bzw. die Wandungen dieses Reinraums bestehen dann hauptsächlich aus einem dünnen Blech und haben selbst keine tragende Funktion.

Die Umformungsstationen werden anschließend mit bzw. über einen Formträgerhalter an den Wandungen des Reinraums montiert. Die Umformungsstationen sind daher bevorzugt zum größten Teil innerhalb des Reinraums angeordnet und bestehen bevorzugt aus H₂O₂ beständigen Material, so dass sie nicht durch das Sterilisationsmedium angegriffen werden.

Um den Reinraum zu verschließen wird bevorzugt ein Deckel auf den unteren Teil des Reinraums angeordnet, wobei dieser Deckel bevorzugt ebenfalls aus einem dünnen Blech besteht und keine tragende Funktion hat. Der Deckel ist dabei bevorzugt nicht formschlüssig mit den Teilen der Station verbunden.

Bevorzugt ist der Reinraum mit dem Deckel abgeschlossen, und dieser Deckel ist mittels Befestigungseinrichtungen an wenigstens einem tragenden Element innerhalb des Reinraums und bevorzugt an mehreren tragenden Elementen innerhalb des Reinraums angeordnet.

Bevorzugt sind diese tragenden Elemente aus einer Gruppe von tragenden Elementen ausgewählt, welche Reckeinrichtungen, Formträgerhalter, eine hintere Isolatorwand, Säulen die auf dem Transportträger angeordnet sind und dergleichen sind.

Bevorzugt weist die Vorrichtung daher eine und besonders bevorzugt eine Vielzahl von Befestigungssäulen auf, um den Deckel auf den Reinraumwandungen zu befestigen und diesen abzustützen. Die Befestigungssäulen sind bevorzugt auf dem Transportträger bzw. Blasrad angeordnet und bevorzugt außerhalb des Reinraums. Besonders bevorzugt sind die Befestigungssäulen mittig auf dem Transportträger angeordnet. Daneben ist es auch denkbar, dass der Deckel zusätzlich über den Formträger und/oder die Reckeinrichtungen abgestützt wird und/oder auch anderen Anlagenteilen und/oder Baugruppen befestigt ist.

Dieser Aufbau ermöglicht eine deutlich einfachere Montage, da die Umformungsstationen schon vormontiert von oben auf das Blasrad gehoben werden können. Außerdem ist das Blasrad mit Isolator einfacher zu fertigen und um einiges leichter.

Bei der Vorrichtung zum Umformen von Kunststoffvorformlingen zu Kunststoffbehältnissen handelt es sich bevorzugt um eine Blasformmaschinen. Bei dem oben erwähnten drehbaren Transportträger handelt es sich bevorzugt um ein Blasrad. Die Blasformeinrichtungen sind bevorzugt mehrteilig ausgebildet und weisen zwei Blasformhälften und eine Bodenform auf. Bevorzugt sind diese Blasformhälften lösbar an einer Formträgerschale oder an den Blasformträgern angeordnet. Die Blasformträger sind bezüglich einander schwenkbar, um die Blasformeinrichtungen zu öffnen und zu schließen. Zudem weist der Blasformträger Verriegelungsmechanismen auf, um die Formhälften während des Blasvorgangs gegeneinander zu verriegeln.

Zur Beaufschlagung der Kunststoffvorformlinge mit Druckluft weist die Vorrichtung bevorzugt eine Blasdüse auf, welche an eine Mündung der Kunststoffvorformlinge anlegbar ist, um die Kunststoffvorformlinge so mit Blasluft zu beaufschlagen bzw. mittels Blasluft zu expandieren. Daneben ist bevorzugt auch eine Ventilanordnung vorgesehen, welche die Zuführung der Blasluft an die Kunststoffvorformlinge steuert.

Die Blasformeinrichtungen werden bevorzugt innerhalb des Reinraums transportiert, wobei der Reinraum bevorzugt von mehreren Wandungen begrenzt wird.

Bei einer bevorzugten Ausführungsform sind die Wandungen des Reinraums als nicht tragende Einrichtung ausgeführt sind, und demnach, wie oben erwähnt, weder dazu geeignet noch dazu bestimmt ist, Bestandteile der Vorrichtung zu tragen.

Bei einer weiteren bevorzugten Ausführungsform wird der Reinraum von wenigstens einer stehenden Wandung und einer sich gegenüber dieser stehenden Wandung bewegenden Wandung begrenzt. Die Vorrichtung weist demnach bevorzugt einen stationären Teil und einen drehbaren Teil auf. Bevorzugt ist der Transportträger ein Bestandteil des drehbaren Teils der Vorrichtung. Bevorzugt ist auch der Deckel ein Bestandteil des drehbaren bzw. sich drehenden Teils der Vorrichtung.

Bevorzugt ist der wenigstens eine oben erwähnte umlaufende Kanal ein Bestandteil des stationären Teils der Vorrichtung. Bevorzugt weist die Vorrichtung eine umlaufende Wandung auf, welche in ein in dem Kanal befindliches flüssiges Medium, beispielsweise Wasser eintaucht. Diese Wandung ist bevorzugt Bestandteil des drehenden Teils der Vorrichtung.

Bevorzugt ist der oben erwähnte umlaufende Kanal ringförmig ausgebildet. Besonders bevorzugt weist der Reinraum eine torusförmige Gestalt auf. Besonders bevorzugt wird der Reinraum durch diesen genannten ringförmigen Kanal und bevorzugt einen weiteren entsprechend ringförmigen Kanal abgegrenzt.

Dabei kann beispielsweise der Transportträger, an dem die Blasformeinrichtungen angeordnet sind, bereits eine dieser Wandungen und insbesondere die sich bewegende Wandung aufweisen bzw. ausbilden. Der Reinraum grenzt die Blasformeinrichtungen dabei insbesondere von einer unsterilen Umgebung ab.

Bei einer bevorzugten Ausführungsform weist die Vorrichtung eine Dichtungseinrichtung auf, um den Reinraum gegenüber einer unsterilen Umgebung abzudichten und diese Dichtungseinrichtung weist wenigstens einen mit einer Flüssigkeit befüllbaren umlaufenden Kanal auf. Besonders bevorzugt weist die Dichtungseinrichtung eine umlaufende Wandung auf, welche in den umlaufenden Kanal ragt, wobei es sich bei dieser Wandung um die sich bewegende Wandung handelt und diese bevorzugt drehbar ausgebildet ist.

Bei dieser in den Kanal ragenden umlaufenden Wandung handelt es sich bevorzugt um wenigstens ein Schwert, welches in das fließfähige Medium eintaucht und so einen unsterilen Bereich von dem sterilen Bereich trennt. Es wird demnach vorgeschlagen zur Abdichtung des Reinraums ein sogenanntes Wasserschloss zu verwenden.

Die umlaufende Wandung der Dichtungseinrichtung ist dabei bevorzugt drehbar bezüglich des Kanals ausgebildet. Bevorzugt ist dabei die Drehbewegung dieser Wandung an die Drehbewegung des Transportträgers gekoppelt. Bei dieser Wandung handelt es sich damit bevorzugt um ein umlaufendes Schwert, welches einen Bestandteil des Wasserschlosses, bzw. der hydraulischen Dichtung bildet. Besonders bevorzugt taucht diese Wandung in die in dem Kanal befindliche Flüssigkeit. Es wäre umgekehrt auch denkbar, dass der Kanal drehbar ist und die umlaufende Wandung stationär ausgebildet ist.

Bevorzugt ist der umlaufende Kanal durch die umlaufende Wandung der Dichtungseinrichtung in einem radial inneren Kanalabschnitt und einem radial äußeren Kanalabschnitt unterteilt, wobei das Schwert bevorzugt in einen Bereich zwischen dem inneren Kanalabschnitt und dem äußeren Kanalabschnitt in die Flüssigkeit eintaucht.

In einer bevorzugten Ausführungsform sind die Wandungen des Reinraums aus einem Metallblech hergestellt, welche aus einer Gruppe von Metallblechen ausgewählt ist, welche Aluminiumblech, Stahlblech, Edelstahlblech und dergleichen enthält und/oder die Wandungen eine Materialdicke aufweisen, die kleiner ist als 50 mm, bevorzugt kleiner als 40 mm, besonders bevorzugt kleiner als 30 mm und besonders bevorzugt kleiner als 20 mm. Vorteilhaft weisen die Wandungen des Reinraums eine Materialdicke auf, die größer ist als 1 mm, bevorzugt größer als 2 mm und bevorzugt größer als 3 mm. Besonders bevorzugt liegt die Materialdicke der Wandungen zwischen 3 mm und 20 mm. Bevorzugt sind die Wandungen aus einem Material mit der Stahlnummer 1.4301. Diese Materialien und Materialdicken sind dabei vorteilhaft, um eine möglichst leichte Bauweise des Reinraums zu realisieren.

Bei einer bevorzugten Ausführungsform ist der Formträgerhalter innerhalb des Reinraums angeordnet und besonders bevorzugt vollständig innerhalb des Reinraums angeordnet. Bevorzugt ist der Formträgerhalten auf dem Transportträger angeordnet bzw. auf diesem befestigt.

Bei einer weiteren bevorzugten Ausführungsform ist der Formträgerhalter aus einem Material hergestellt, welches aus einer Gruppe von Materialien ausgewählt ist, welche Aluminiumguss, Stahlguss und dergleichen enthält. Bevorzugt besteht der Formträgerhalter dabei aus einem Material, welches eine höhere Festigkeit als die Wandungen des Reinraums aufweist. Bevorzugt ist der Formträgerhalter, nicht aus Stahlguss gefertigt, sondern aus einem Aluminiumguss, um diesen leichter zu machen und Gewicht einzusparen. Bevorzugt fixiert der Formträgerhalter dabei das untere Wasserschloss.

Bei einer bevorzugten Ausführungsform ist die Reckeinrichtung wenigstens teilweise außerhalb des Reinraums angeordnet. Bevorzugt ist der größte Teil der Reckeinrichtung außerhalb des Reinraums angeordnet. Bevorzugt ragt die Reckeinrichtung durch eine Öffnung in dem Deckel nach außen bzw. in den Reinraum hinein.

In einer vorteilhaften Ausführungsform ist dabei eine Verriegelungseinrichtung, insbesondere eine Verriegelungsrolle und eine Verriegelungskurve, zum Verriegeln der Blasformeinrichtung innerhalb des Reinraums angeordnet. Die Verriegelungseinrichtung dient dabei zum Verriegeln der Blasformseitenteile und des Bodenteils, insbesondere während des Umformungsvorgangs. Weiterhin ist vorteilhaft auch eine Bodenhubeinrichtung und Bodenhubansteuerung zur Bewegung eines Bodenteils der Blasformeinrichtung in der Längsrichtung innerhalb des Reinraums angeordnet. Das Anordnen von beweglichen Teilen innerhalb des Reinraums ist dabei vorteilhaft, da hierdurch Faltenbälge, welche zur Abdichtung von in den Reinraum hineinragenden, insbesondere beweglichen, Teilen notwendig sind, entfallen, wodurch auch die Montage vereinfacht wird.

Bei einer bevorzugten Ausführungsform sind die Umformungsstationen und/oder die Verriegelungseinrichtung und/oder die Bodenhubeinrichtung aus einem H₂O₂ beständigen Material hergestellt. Dies ist vorteilhaft, da die Bauteile dadurch nicht beschädigt werden, wenn der Reinraum mit einem (Sterilisations)Medium beaufschlagt wird oder Teile innerhalb des Reinraums mit sterilisiert werden.

Die vorliegende Erfindung ist weiter auf ein Verfahren zum Betreiben einer Vorrichtung zum Umformen von Kunststoffvorformlingen zu Kunststoffbehältnissen gerichtet, mit einer Transporteinrichtung, welche die umzuformenden Kunststoffvorformlinge entlang eines vorgegebenen Transportpfads transportiert, wobei die Transporteinrichtung einen drehbaren Transportträger aufweist, an dem eine Vielzahl von Umformungsstationen angeordnet ist, wobei diese Umformungsstationen jeweils Blasformeinrichtungen aufweisen, innerhalb derer die Kunststoffvorformlinge durch Beaufschlagung mit einem fließfähigen Medium zu den Kunststoffbehältnissen umgeformt werden und die Umformungsstationen jeweils Beaufschlagungseinrichtungen aufweisen, welche die Kunststoffvorformlinge mit dem fließfähigen Medium beaufschlagen, wobei die Umformungsstationen jeweils Reckeinrichtungen aufweisen, welche die Kunststoffvorformlinge in deren Längsrichtung dehnen und diese Reckeinrichtungen jeweils wenigstens eine in der Längsrichtung der Kunststoffvorformlinge bewegliche Reckstange aufweisen, welche in die Kunststoffvorformlinge eingeführt werden und ein Reinraum vorgesehen ist, welcher von mehreren Wandungen begrenzt wird und innerhalb dessen die Kunststoffvorformlinge zu den Kunststoffbehältnissen expandiert werden.

Erfindungsgemäß sind die Reckeinrichtungen und die Umformungsstationen jeweils an einem Formträgerhalter angeordnet und werden von diesem gehalten, so dass der Formträgerhalter als tragende Einrichtung der Vorrichtung ausgeführt ist und die Wandungen des Reinraums nur dazu geeignet und bestimmt sind, die Vorrichtung von einer unsterilen Umgebung abzugrenzen.

Es wird demnach auch verfahrensseitig vorgeschlagen, die Wandungen des Reinraums als nicht tragende Einrichtungen auszubilden und nur noch, bevorzugt ausschließlich, dazu dienen die Vorrichtung von der unsterilen Umgebung abzugrenzen und die Umformungsstation und die Reckeinheit an einem Formträger anzuordnen, welcher als tragende Einrichtung ausgebildet ist. Die Wandungen des Reinraums haben demnach bevorzugt (nur bzw. ausschließlich) eine abgrenzende Funktion.

Dabei ist die oben beschriebene Vorrichtung insbesondere dazu eingerichtet und dafür vorgesehen, dieses beschriebene Verfahren durchzuführen, d. h., dass alle für die obig beschriebene Vorrichtung ausgeführten Merkmale ebenso für das hier beschriebene Verfahren offenbart sind und umgekehrt.

Weitere Vorteile und Ausführungsformen ergeben sich aus der beigefügten Zeichnung.

Darin zeigt:

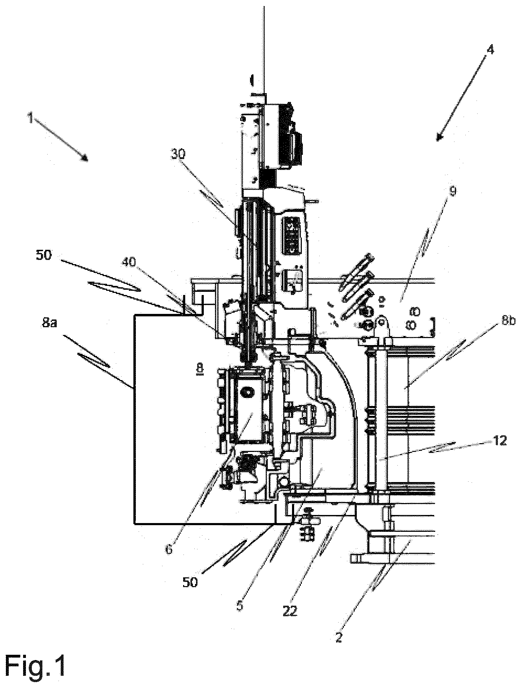

- Fig. 1: eine Detaildarstellung der erfindungsgemäßen Umformungsstation.

Figur 1 zeigt eine schematische Darstellung einer erfindungsgemäßen Vorrichtung 1 zum Umformen von Kunststoffvorformlingen (nicht gezeigt) zu Kunststoffbehältnissen (nicht gezeigt). Bei dieser Vorrichtung handelt es sich bevorzugt um eine Umformungsstation 4.Die Umformung wird dabei innerhalb einer Blasformeinrichtung 6 vorgenommen, welche an einem Formträgerhalter 5 angeordnet ist. Dieser Formträgerhalter 5 ist dabei bevorzugt als tragende Einrichtung ausgebildet trägt neben der Blasformeinrichtung 6 auch die Reckeinrichtung 30.

Die Formträgerhalter 5 sind dabei auf dem Transportträger 22 angeordnet, welcher die Blasformeinrichtungen 6 innerhalb eines Reinraums 8 transportiert. Der Reinraum 8 weist dabei wenigstens eine stehende Wandung 8a und eine sich bewegende Wandung 8b auf, welche mittels einer Dichtungseinrichtung 50 gegeneinander abgedichtet sind. Diese Wandungen 8a, 8b des Reinraums 8 sind dabei bevorzugt als nicht tragende Einrichtungen ausgebildet.

Der Reinraum 8 wird zudem von einen Deckel 9 abgegrenzt. Der Deckel 9 ist dabei über mehrere (nur eine gezeigt) Befestigungseinrichtungen 12 an dem Transportträger 22 befestigt und ist bevorzugt, wie die Wandungen des Reinraums, als nicht tragende Einrichtung ausgebildet.

Das Bezugszeichen 40 kennzeichnet die Beaufschlagungseinrichtung, welche die in der Blasformeinrichtung 6 (nicht erkennbaren) Kunststoffvorformlinge zu deren Expansion mit einem fließfähigen Medium beaufschlagt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Transporteinrichtung
- 4: Umformungsstation
- 5: Formträgerhalter
- 6: Blasformeinrichtung
- 8: Reinraum
- 8a: stehende Wandung
- 8b: bewegende Wandung
- 9: Deckel
- 12: Befestigungseinrichtung
- 22: Transportträger
- 30: Reckeinrichtung
- 40: Beaufschlagungseinrichtung
- 50: Dichtungseinrichtung

## Patentansprüche

1. Vorrichtung (1) zum Umformen von Kunststoffvorformlingen zu Kunststoffbehältnissen mit einer Transporteinrichtung (2), welche die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen (6) aufweisen, innerhalb derer die Kunststoffvorformlinge durch Beaufschlagung mit einem fließfähigen Medium zu den Kunststoffbehältnissen umformbar sind und die Umformungsstationen (4) jeweils Beaufschlagungseinrichtungen (40) aufweisen, um die Kunststoffvorformlinge mit dem fließfähigen Medium zu beaufschlagen, wobei die Umformungsstationen (4) jeweils Reckeinrichtungen (30) zum Dehnen der Kunststoffvorformlinge in deren Längsrichtung (L) aufweisen und diese Reckeinrichtungen (30) jeweils wenigstens eine in der Längsrichtung der Kunststoffvorformlinge bewegliche Reckstange aufweisen, welche in die Kunststoffvorformlinge einführbar ist und wobei die Vorrichtung einen Reinraum (8) aufweist, welcher von mehreren Wandungen (8a, 8b) begrenzt wird und innerhalb dessen die Kunststoffvorformlinge zu den Kunststoffbehältnissen expandiert werden,
**dadurch gekennzeichnet, dass**
die Reckeinrichtungen (30) und/oder die Umformungsstationen (4) an einem Formträgerhalter (5) angeordnet sind und von diesem gehalten werden, so dass der Formträgerhalter (5) als tragende Einrichtung der Vorrichtung (1) ausgeführt ist und die Wandungen (8a, 8b) des Reinraums (8) nur dazu geeignet und bestimmt sind, die Vorrichtung (1) von einer unsterilen Umgebung abzugrenzen.

2. Vorrichtung (1) nach Anspruch 1,
**dadurch gekennzeichnet, dass**
die Wandungen (8a, 8b) des Reinraums (8) als nicht tragende Einrichtung ausgeführt sind.

3. Vorrichtung nach Anspruch 1,
**dadurch gekennzeichnet, dass**
der Reinraum von wenigstens einer stehenden Wandung (8a) und einer sich gegenüber dieser stehenden Wandung bewegenden Wandung (8b) begrenzt wird.

4. Vorrichtung (1) nach Anspruch 1,
**dadurch gekennzeichnet, dass**
die Vorrichtung (1) eine Dichtungseinrichtung (50) aufweist, um den Reinraum (8) gegenüber einer unsterilen Umgebung abzudichten und diese Dichtungseinrichtung (50) wenigstens einen mit einer Flüssigkeit befüllbaren umlaufenden Kanal aufweist.

5. Vorrichtung (1) nach Anspruch 4,
**dadurch gekennzeichnet, dass**
die Dichtungseinrichtung eine umlaufende Wandung aufweist, welche in den umlaufenden Kanal ragt, wobei es sich bei dieser Wandung um die sich bewegende Wandung (8b) handelt und diese bevorzugt drehbar ausgebildet ist.

6. Vorrichtung (1) nach Anspruch 1,
**dadurch gekennzeichnet, dass**
die Wandungen (8a, 8b) aus einem Metallblech hergestellt sind, welche aus einer Gruppe von Metallblechen ausgewählt ist, welche Aluminiumblech, Stahlblech, Edelstahlblech und dergleichen enthält und/oder die Wandungen (8a, 8b) eine Materialdicke aufweisen, die kleiner ist als 50 mm, bevorzugt kleiner als 40 mm, besonders bevorzugt kleiner als 30 mm und besonders bevorzugt kleiner als 20 mm.

7. Vorrichtung (1) nach Anspruch 1,
**dadurch gekennzeichnet, dass**
der Formträgerhalter (5) innerhalb des Reinraums (8) angeordnet ist.

8. Vorrichtung (1) nach Anspruch 1,
**dadurch gekennzeichnet, dass**
der Formträgerhalter (5) aus einem Material hergestellt ist, welches aus einer Gruppe von Materialien ausgewählt ist, welche Aluminiumguss, Stahlguss und dergleichen enthält.

9. Vorrichtung (1) nach Anspruch 1,
**dadurch gekennzeichnet, dass**
die Reckeinrichtung (30) wenigstens teilweise außerhalb des Reinraums (8) angeordnet ist.

10. Vorrichtung (1) nach Anspruch 1,
**dadurch gekennzeichnet, dass**
eine Verriegelungseinrichtung, insbesondere eine Verriegelungsrolle und eine Verriegelungskurve, zum Verriegeln der Blasformeinrichtung (6) innerhalb des Reinraums (8) angeordnet sind.

11. Vorrichtung (1) nach Anspruch 1,
**dadurch gekennzeichnet, dass**
eine Bodenhubeinrichtung und Bodenhubansteuerung zur Bewegung eines Bodenteils der Blasformeinrichtung (6) in der Längsrichtung (L) innerhalb des Reinraums (8) angeordnet ist.

12. Vorrichtung (1) nach wenigstens einem der vorhergehenden Ansprüche,
**dadurch gekennzeichnet, dass**
die Umformungsstationen (4) und/oder die Verriegelungseinrichtung und/oder die Bodenhubeinrichtung aus einem H₂O₂ beständigen Material hergestellt sind.

13. Verfahren zum Betreiben einer Vorrichtung (1) zum Umformen von Kunststoffvorformlingen zu Kunststoffbehältnissen, mit einer Transporteinrichtung (2), welche die umzuformenden Kunststoffvorformlinge entlang eines vorgegebenen Transportpfads transportiert, wobei die Transporteinrichtung (2) einen drehbaren Transportträger (22) aufweist, an dem eine Vielzahl von Umformungsstationen (4) angeordnet ist, wobei diese Umformungsstationen (4) jeweils Blasformeinrichtungen (6) aufweisen, innerhalb derer die Kunststoffvorformlinge durch Beaufschlagung mit einem fließfähigen Medium zu den Kunststoffbehältnissen umgeformt werden und die Umformungsstationen (4) jeweils Beaufschlagungseinrichtungen (40) aufweisen, welche die Kunststoffvorformlinge mit dem fließfähigen Medium beaufschlagen, wobei die Umformungsstationen (4) jeweils Reckeinrichtungen (30) aufweisen, welche die Kunststoffvorformlinge in deren Längsrichtung dehnen und diese Reckeinrichtungen (30) jeweils wenigstens eine in der Längsrichtung der Kunststoffvorformlinge bewegliche Reckstange aufweisen, welche in die Kunststoffvorformlinge eingeführt werden und ein Reinraum (8) vorgesehen ist, welcher von mehreren Wandungen (8a, 8b) begrenzt wird und innerhalb dessen die Kunststoffvorformlinge zu den Kunststoffbehältnissen expandiert werden,
**dadurch gekennzeichnet, dass**
die Reckeinrichtungen (30) und/oder die Umformungsstationen (4) jeweils an einem Formträgerhalter (5) angeordnet sind und von diesem gehalten werden, so dass der Formträgerhalter (5) als tragende Einrichtung der Vorrichtung (1) ausgeführt ist und die Wandungen (8a, 8b) des Reinraums (8) nur dazu geeignet und bestimmt sind, die Vorrichtung (1) von einer unsterilen Umgebung abzugrenzen.
